# FASCICULE DE BREVET EUROPEEN

(11) **EP 0 705 404 B1**
(45) Date de publication et mention de la délivrance du brevet: **28.05.1997**
(21) Numéro de dépôt: 95904342.3
(22) Date de dépôt: 23.06.1994
(51) Int. Cl.: F16L 27/04, F01N 7/18

(54) **PIECE METALLIQUE COMPORTANT UN ELEMENT DE PAROI SPHERIQUE, PROCEDE DE REALISATION DE CETTE PIECE, ET ACCOUPLEMENT D'ECHAPPEMENT A ROTULE COMPORTANT UNE TELLE PIECE**
METALLTEIL MIT EINEM ELEMENT DAS EINE KUGELWAND HAT, VERFAHREN ZUR HERSTELLUNG DES METALLTEILES UND KUGELKUPPLUNG FÜR EINE ABGASVORRICHTUNG
METAL PART COMPRISING A SPHERICAL WALL ELEMENT, METHOD FOR PRODUCING SAME, AND EXHAUST PIPE SOCKET JOINT COMPRISING SAID PART

(30) Priorité: 25.06.1993 FR 9307758
(43) Date de publication de la demande: 10.04.1996
(73) Titulaire: FINANCIERE DE SEGUR, F-75007 Paris (FR)
(72) Inventeur: BRANDENER, Louis, F-78300 Poissy (FR)
(74) Mandataire: Fruchard, Guy
(86) Numéro de dépôt international: FR9400760
(87) Numéro de publication internationale: WO9500792

(56) Documents cités:
- EP-A- 0 115 016
- FR-A- 2 019 323
- FR-A- 2 596 492
- US-A- 5 040 805

## Description

La présente invention concerne une pièce métallique comportant un élément de paroi sphérique, un procédé de réalisation de cette pièce, et un accouplement d'échappement à rotule comportant une telle pièce.

On sait que pour éviter la transmission des oscillations d'un moteur au tube d'échappement, en particulier dans le cas d'un moteur transversal, il est nécessaire de disposer un accouplement flexible entre le collecteur d'échappement qui est fixé au moteur, et le pot d'échappement qui est fixé au châssis du véhicule. On connaît des accouplements flexibles appelés accouplements à rotule dans lesquels un tronçon de tube est évasé à une extrémité pour former une partie d'appui sphérique concave qui coopère avec une partie d'appui sphérique convexe portée par un tronçon de tube en regard, les parties d'appui sphériques étant maintenues au contact l'une de l'autre par des organes de liaison élastiques assurant une pression suffisante entre les parties d'appui sphériques pour maintenir une étanchéité de l'accouplement tout en permettant un débattement d'un tronçon de tube par rapport à l'autre. La partie d'appui sphérique convexe est généralement constituée par la surface externe d'un joint annulaire monté sur l'un des tronçon de tube et prenant appui sur une bride fixée à ce tube.

Comme connu du document US-A-5 040 805, la partie d'appui sphérique concave est habituellement réalisée par emboutissage de l'extrémité du tube de sorte qu'il n'est pas possible de garantir que la surface interne concave soit parfaitement sphérique ni que cette surface sphérique ait un rayon exactement identique au rayon de la surface externe du joint d'échappement, surtout après une utilisation prolongé de l'accouplement aux températures élevées auxquelles l'accouplement est soumis lors du passage des gaz d'échappement dans l'accouplement flexible.

En raison de ces imperfections la surface sphérique concave et la surface sphérique convexe ne frottent pas l'une sur l'autre sur l'ensemble de leurs parties en regard mais plutôt selon des zones réparties de façon discontinue et entre lesquelles les gaz peuvent s'échapper de sorte que l'étanchéité de l'accouplement n'est pas assurée.

Selon l'invention, on propose une pièce métallique pouvant être utilisée comme élément constitutif d'un accouplement d'échappement à rotule, cette pièce métallique comportant un élément de paroi sphérique comprenant une série de bandes annulaires écrouies espacées les unes des autres et s'étendant de façon sensiblement coaxiale.

Ainsi, les bandes annulaires écrouies qui sont plus résistantes à la déformation que les parties non écrouies de la pièce métallique constituent pour celles-ci une armature très précise qui améliore considérablement l'étanchéité de l'accouplement lorsque la paroi sphérique est associée à une surface sphérique correspondante.

Selon une application préférée de l'invention, on réalise un accouplement d'échappement à rotule comportant un premier tronçon de tube métallique ayant une extrémité comprenant un élément de paroi sphérique présentant une surface interne sphérique concave, et un second tronçon de tube portant un joint d'échappement annulaire comprenant un élément de paroi sphérique ayant une surface externe sphérique convexe en contact avec la surface interne concave du premier tronçon de tube, les éléments de paroi sphérique du premier tronçon de tube et du joint d'échappement comportant des bandes annulaires écrouies ayant des surfaces en retrait sur des côtés des éléments de parois qui ne sont pas en regard. Ainsi, on obtient une très bonne étanchéité de l'accouplement en raison de la précision de forme des pièces le constituant tout en minimisant les forces de frottement entre les surfaces sphériques accouplées.

D'autres avantages de l'invention apparaîtront encore à la lecture de la description qui suit d'un mode de réalisation particulier non limitatif de l'invention en relation avec les figures ci-jointes parmi lesquelles :
- la figure 1 est une vue en élévation d'un accouplement à rotule comportant des éléments de paroi sphérique selon l'invention, une moitié de la figure illustrant l'accouplement selon une coupe passant par l'axe longitudinal de l'accouplement,
- la figure 2 est une vue en perspective partielle agrandie de l'accouplement de la figure 1,
- la figure 3 est une vue en perspective d'une ébauche de pièce métallique selon l'invention.

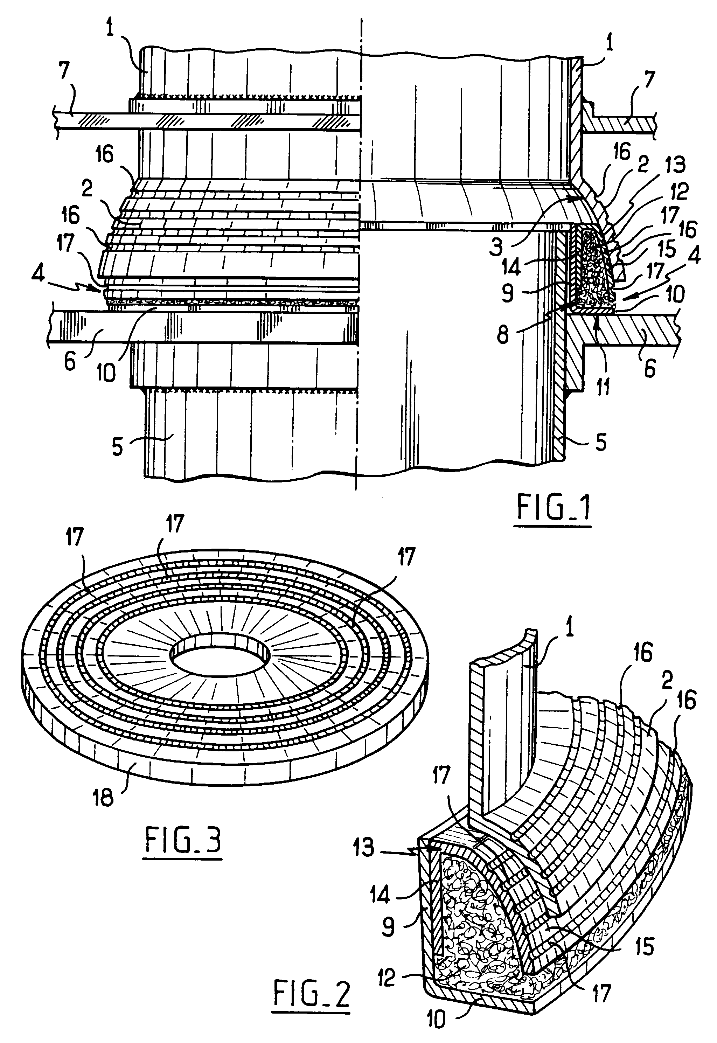

En référence aux figures 1 et 2, la pièce métallique selon l'invention est particulièrement adaptée à une application à un accouplement à rotule tel qu'illustré. L'accouplement à rotule comporte un premier tronçon de tube 1 ayant une extrémité comprenant un élément de paroi sphérique 2 ayant une surface interne sphérique concave 3 qui s'étend en regard d'un joint d'échappement généralement désigné en 4. Le joint 4 est engagé autour de l'extrémité cylindrique d'un second tronçon de tube 5 et prend appui sur une bride 6 fixée au second tronçon de tube, par exemple par soudage, légèrement en retrait par rapport à l'extrémité du tronçon de tube 5. Une bride 7 est également fixée au premier tronçon de tube 1. Les brides 6 et 7 sont reliées par des organes de liaison non représentés les sollicitant l'une vers l'autre.

L'élément de paroi sphérique 2 du tube 1 comporte des bandes annulaires écrouies 16 qui sont espacées les unes des autres et s'étendent de façon sensiblement coaxiale autour de l'axe longitudinal du premier tronçon de tube 1.

Dans le mode de réalisation préféré illustré, l'élément de paroi sphérique 2 est obtenu d'une façon connue en soi par emboutissage d'une ébauche métallique tubulaire cylindrique qui est progressivement évasée selon une forme sphérique par une série de passes d'emboutissage. Selon l'invention, les bandes annulaires écrouies 16 sont de préférence réalisées sur l'ébauche métallique en appliquant localement une force suffisante pour obtenir un écrouissage de l'ébauche métallique selon des bandes circulaires espacées les unes des autres. L'écrouissage est par exemple réalisé par galetage en appliquant le galet sur la surface extérieure de l'ébauche métallique cylindrique. Dans ce cas, la surface sur laquelle le galet est appliquée est marquée par le galet de sorte que la surface des bandes annulaires écrouies est en retrait par rapport à la surface externe de l'élément de paroi sphérique 2 après mise en forme de celui-ci.

Le joint d'échappement annulaire comporte un support tubulaire généralement désigné en 8 comprenant un fût cylindrique 9 engagé autour de l'extrémité du tronçon de tube 5 et une embase 10 qui s'étend perpendiculairement au fût cylindrique 9 et comprend une surface inférieure plane 11 qui repose sur la face en regard de la bride 6.

Un tampon élastique annulaire 12, par exemple un tampon élastique en fil d'acier tricoté et comprimé, est monté sur le fût cylindrique 9 et est recouvert par une coupelle annulaire généralement désignée en 13 comprenant une partie centrale tubulaire 14 montée pour coulisser de façon étanche sur le fût cylindrique 9 du support tubulaire et un élément de paroi périphérique 15 de forme sphérique fixé à la partie centrale 14 et ayant une surface externe sphérique convexe recouvrant le tampon élastique annulaire 12.

Afin de permettre un montage et un remplacement aisé du joint annulaire 4 en dépit des tolérances de réalisation du second tronçon de tube 5, ou des déformations de celui-ci après un certain temps d'utilisation, le diamètre interne du fût cylindrique 9 du support tubulaire 8 est de préférence légèrement supérieur au diamètre externe du tronçon de tube 5 de façon à pouvoir s'engager librement sur celui-ci.

L'élément de paroi sphérique 15 de la coupelle 13 du joint d'échappement 4 comporte des bandes annulaires écrouies 17 espacées les unes des autres et s'étendant de façon sensiblement coaxiale autour de l'axe longitudinal du fût cylindrique 9. De même que l'élément de paroi sphérique 2 du premier tronçon de tube 1, la coupelle 13 du joint d'échappement 4 est de préférence réalisée par emboutissage d'une ébauche métallique. Dans ce cas, l'ébauche métallique est par exemple une plaque annulaire plane 18 comme représentée sur la figure 3. Préalablement à l'emboutissage, les bandes annulaires écrouies 17 sont réalisées par exemple en frappant la plaque annulaire 18 avec un poinçon comportant des nervures circulaires concentriques. A titre d'exemple, la coupelle 13 est réalisée dans une plaque d'acier annulaire ayant une épaisseur de huit dixièmes de millimètre et pour la réalisation d'une coupelle ayant un diamètre d'environ 100 mm et une hauteur d'environ 12 mm on prévoit avantageusement de réaliser six bandes annulaires écrouies ayant une largeur de 0,5 mm et espacées les unes des autres d'une distance radiale de 1,5 mm, la hauteur des nervures du poinçon étant de trois dixièmes de millimètre.

Dans le mode de réalisation illustré, l'ébauche 18 a été déformée par emboutissage pour que la surface qui a été frappée soit tournée vers l'extérieur de la coupelle 13 de sorte que les bandes annulaires écrouies 17 ont une surface en retrait par rapport à la surface externe sphérique du joint d'échappement 4.

Lorsque l'accouplement flexible est monté, l'étanchéité entre le premier tronçon de tube 1 et le joint d'échappement annulaire 4 est assuré par le contact de la surface interne sphérique concave du premier tronçon de tube avec la surface externe convexe de la partie de paroi sphérique 15 de la coupelle 13. Les bandes annulaires écrouies 16 et 17 jouent le rôle d'une armature pour les éléments de paroi sphérique correspondants et assurent une très bonne précision des surfaces sphériques en regard de sorte qu'une excellente étanchéité est obtenue. En outre, la disposition de la surface en retrait des bandes annulaires écrouies 17 sur le côté externe de la coupelle 13 minimise le frottement de l'élément de paroi sphérique 2 sur le joint d'échappement 4.

Par ailleurs, l'étanchéité entre le joint d'échappement 4 et le second tronçon de tube 5 est assurée par le contact de la surface inférieure plane 11 de l'embase 10 avec la surface supérieure de la bride 6.

A titre d'exemple, on a réalisé le support tubulaire du joint d'échappement par emboutissage d'un tube de 1 mm d'épaisseur ayant un diamètre interne de 64 mm, le fût cylindrique ayant une hauteur de 14 mm. Parallèlement on a réalisé la coupelle par emboutissage d'une feuille d'acier annulaire de 0,8 mm d'épaisseur pour obtenir une partie centrale cylindrique ayant une hauteur d'environ 10 mm et une partie périphérique ayant une hauteur d'environ 12 mm. Une préforme annulaire en tricot d'acier tricoté a été disposée autour du fût cylindrique disposé dans une matrice et recouverte par la coupelle. L'ensemble a ensuite été comprimé axialement jusqu'à ce que l'ensemble ait une hauteur sensiblement égale à la hauteur du fût cylindrique. Lors de cette compression, la partie centrale 14 de la coupelle 13 est légèrement sertie sur le fût cylindrique 9 du support tubulaire par la réaction de la masse de fil d'acier tricoté de sorte que la coupelle 12 coulisse de façon étanche sur le fût cylindrique, ce qui permet tout à la fois de profiter des caractéristiques élastiques du tampon annulaire 12 tout en réalisant une étanchéité entre la coupelle 13 et le support tubulaire 8.

Bien entendu l'invention n'est pas limitée au mode de réalisation décrit et on peut y apporter des variantes de réalisation sans sortir du cadre de l'invention tel que défini par les revendications.

En particulier, bien que la réalisation de l'élément de paroi sphérique 2 du premier tronçon de tube 1 ait été décrite à partir d'une ébauche tubulaire cylindrique, cet élément de paroi sphérique peut être réalisé comme la coupelle 13 à partir d'une plaque plane annulaire sur laquelle les bandes annulaires écrouies 16 sont réalisées de façon concentrique, la plaque étant ensuite déformée de façon appropriée et la pièce obtenue étant fixée à l'extrémité du tronçon de tube 1.

Bien que les bandes annulaires écrouies aient été décrites avec une surface en retrait du côté externe des éléments de paroi 2 et 15, on peut réaliser des bandes annulaires écrouies ayant une surface en retrait du côté interne de l'élément de paroi 2. Dans ce cas la surface externe de l'élément de paroi 15 sera de préférence lisse, par exemple en réalisant les bandes écrouies 17 avec la surface en retrait du côté interne de la partie de paroi interne 15. On peut également réaliser les bandes annulaires écrouies 16 avec une surface en retrait du côté externe de l'élément de paroi et les bandes annulaires écrouies 17 avec la surface en retrait du côté interne de l'élément de paroi 15.

Bien que dans les modes de réalisation décrits l'écrouissage des bandes annulaires soit obtenu par application d'une force sur un côté seulement de l'ébauche métallique, on peut également prévoir d'appliquer une force symétrique des deux côtés de l'ébauche métallique afin de minimiser la déformation tout en obtenant un écrouissage du métal.

## Revendications

1. Pièce métallique comportant un élément de paroi sphérique (2, 15) caractérisée en ce que l'élément de paroi sphérique comporte une série de bandes annulaires écrouies (16, 17) espacées les unes des autres et s'étendant de façon sensiblement coaxiale.

2. Procédé de réalisation d'une pièce métallique comportant un élément de paroi sphérique (15), ce procédé comportant l'étape de mettre en forme l'élément de paroi sphérique par emboutissage d'une partie au moins d'une ébauche métallique (18) caractérisé en ce que préalablement à la mise en forme de l'élément de paroi sphérique on réalise sur une partie correspondante de l'ébauche métallique (18) une série de bandes annulaires coaxiales (17) espacées les unes des autres en appliquant une force suffisante pour obtenir un écrouissage de l'ébauche métallique.

3. Accouplement d'échappement à rotule comportant un premier tronçon de tube métallique (1) ayant une extrémité comprenant un élément de paroi sphérique (2) présentant une surface interne sphérique concave (3), et un second tronçon de tube (5) portant un joint d'échappement annulaire (4) ayant une surface externe sphérique convexe en contact avec la surface interne concave du premier tronçon de tube, caractérisé en ce que l'élément de paroi sphérique (2) du premier tronçon de tube comporte une série de bandes annulaires écrouies (16) espacées les unes des autres et s'étendant de façon sensiblement coaxiale.

4. Accouplement d'échappement à rotule comportant un premier tronçon de tube métallique (1) ayant une extrémité évasée présentant une surface interne sphérique concave (3), et un second tronçon de tube (5) portant un joint d'échappement annulaire (4) comprenant un élément de paroi métallique sphérique (15) ayant une surface externe sphérique convexe en contact avec la surface interne concave du premier tronçon de tube, caractérisé en ce que l'élément de paroi sphérique (15) du joint d'échappement (4) comporte une série de bandes annulaires écrouies (17) espacées les unes des autres et s'étendant de façon sensiblement coaxiale.

5. Accouplement d'échappement selon la revendication 4, caractérisé en ce que les bandes annulaires écrouies (17) ont une surface en retrait par rapport à la surface externe du joint d'échappement (4).

6. Accouplement d'échappement selon la revendication 3, caractérisé en ce que le joint d'échappement (4) comprend un élément de paroi métallique sphérique comportant une série de bandes annulaires écrouies (17) espacées les unes des autres et s'étendant de façon sensiblement coaxiale, et en ce que les bandes annulaires écrouies des éléments de paroi du premier tronçon de tube et du joint ont des surfaces en retrait sur des côtés des éléments de paroi qui ne sont pas en regard.

## Patentansprüche

1. Metallteil mit einem Element (2, 15) mit kugelförmiger Wand, dadurch **gekennzeichnet,** daß das Element mit kugelförmiger Wand eine Reihe durch Kaltverformung gebildeter ringförmiger Streifen (16, 17) hat, die voneinander beabstandet und im wesentlichen koaxial sind.

2. Verfahren zum Herstellen eines Metallteils mit einem Element (15) mit kugelförmiger Wand, wobei das Verfahren den Schritt enthält, das Element mit kugelförmiger Wand durch Tiefziehen mindestens eines Teils eines Metallrohlings (18) in seine Form zu bringen, dadurch **gekennzeichnet**, daß vor dem Formen des Elementes mit kugelförmiger Wand in einem entsprechenden Bereich des Metallrohlings (18) eine Reihe voneinander beabstandeter, koaxialer ringförmiger Streifen (17) ausgebildet werden, indem eine Kraft ausgeübt wird, die ausreicht, um eine Kaltverformung des Metallrohlings zu bewirken.

3. Kugelkupplung für eine Abgasvorrichtung mit einem ersten Metallrohrabschnitt (1) mit einem Ende, das ein Element (2) mit kugelförmiger Wand umfaßt, das eine konkave kugelförmige Innenfläche (3) hat, und einem zweiten Metallrohrabschnitt (5), der eine ringförmige Abgasdichtung (4) trägt, deren konvexe kugelförmige Außenfläche mit der konkaven Innenfläche des ersten Rohrabschnittes in Kontakt steht, dadurch **gekennzeichnet**, daß das Element (2) mit kugelförmiger Wand des ersten Rohrabschnittes eine Reihe durch Kaltverformung gebildeter ringförmiger Streifen (16) hat, die voneinander beabstandet und im wesentlichen koaxial sind.

4. Kugelkupplung für eine Abgasvorrichtung mit einem ersten Metallrohrabschnitt (1) mit einem aufgeweiteten Ende, das eine konkave kugelförmige Innenfläche (3) hat, und einem zweiten Rohrabschnitt (5), der eine ringförmige Abgasdichtung (4) trägt, welche ein Element (15) mit kugelförmiger Wand aus Metall mit einer konvexen kugelförmigen Außenseite umfaßt, die mit der konkaven Innenseite des ersten Rohrabschnittes in Kontakt steht, dadurch **gekennzeichnet,** daß das Element (15) mit kugelförmiger Wand der Abgasdichtung (4) eine Reihe durch Kaltverformung gebildeter ringförmiger Streifen (17) hat, die voneinander beabstandet und im wesentlichen koaxial sind.

5. Kupplung für eine Abgasvorrichtung nach Anspruch 4, dadurch **gekennzeichnet**, daß die durch Kaltverformung gebildeten ringförmigen Streifen (17) eine bezüglich der Außenfläche der Abgasdichtung (4) zurückversetzte Fläche haben.

6. Kupplung für eine Abgasvorrichtung nach Anspruch 3, dadurch **gekennzeichnet,** daß die Abgasdichtung (4) ein Element mit kugelförmiger Wand aus Metall mit einer Reihe durch Kaltverformung gebildeter ringförmiger Streifen (17) umfaßt, die voneinander beabstandet und im wesentlichen koaxial sind, und daß die durch Kaltverformung gebildeten ringförmigen Streifen der Wandelemente des ersten Rohrabschnittes und der Dichtung an einander nicht zugewandten Seiten der Wandelemente zurückversetzte Oberflächen haben.

## Claims

1. A metal part including a spherical wall element (2, 15), said part being characterized in that the spherical wall element is provided with a series of work-hardened annular strips (16, 17) spaced apart and extending substantially coaxially.

2. A method of making a metal part including a spherical wall element (15), the method including a step in which the spherical wall element is shaped by stamping at least a portion of a metal blank (18), said method being characterized in that, prior to shaping the spherical wall element, a series of spaced-apart coaxial annular strips (17) are formed on corresponding portions of the metal blank (18) by applying a force that is large enough to work-harden the metal blank.

3. An exhaust ball-coupling comprising firstly a first length of metal tube (1) having an end provided with a spherical wall element (2) that has a concave spherical inside surface (3), and secondly a second length of tube (5) carrying an annular exhaust gasket (4) having a convex spherical outside surface in contact with the concave inside surface of the first length of tube, said ball-coupling being characterized in that the spherical wall element (2) of the first length of tube is provided with a series of work-hardened annular strips (16) spaced apart and extending substantially coaxially.

4. An exhaust ball-coupling comprising a first length of metal tube (1) having a flared end that has a concave spherical inside surface (3), and a second length of tube (5) carrying an annular exhaust gasket (4) provided with a spherical metal wall element (15) having a convex spherical outside surface in contact with the concave inside surface of the first length of tube, said ball-coupling being characterized in that the spherical wall element (15) of the exhaust gasket (4) is provided with a series of work-hardened annular strips (17) spaced apart and extending substantially coaxially.

5. An exhaust coupling according to claim 4, characterized in that the work-hardened annular strips (17) have surfaces that are set back from the outside surface of the exhaust gasket (4).

6. An exhaust coupling according to claim 3, characterized in that the exhaust gasket (4) includes a spherical metal wall element having a series of work-hardened annular strips (17) spaced apart and extending substantially coaxially, and in that the work-hardened annular strips of the wall elements of the first length of tube and of the gasket have surfaces that are set back from respective non-facing sides of the wall elements.
